# EUROPEAN PATENT SPECIFICATION

(11) **EP 4 625 616 B1**
(45) Date of publication and mention of the grant of the patent: **01.04.2026**
(21) Application number: 24212263.8
(22) Date of filing: 12.11.2024
(51) Int. Cl.: H01M 10/613, H01M 10/6567, H01M 50/204, H01M 50/289, H01M 50/531, H01M 50/342, H01M 50/383, H01M 50/505

(54) **BATTERY PACK**
BATTERIEPACK
BLOC-BATTERIE

(30) Priority: 29.03.2024 CN 202420646977 U; 27.08.2024 WO PCT/CN2024/114809
(43) Date of publication of application: 01.10.2025
(73) Proprietor: Eve Energy Co., Ltd., Huizhou, Guangdong 516006 (CN)
(72) Inventor: Zhao, Yuhang, Huizhou, Guangdong 516000 (CN); Huang, Minzhi, Huizhou, Guangdong 516000 (CN); Wang, Yuanyuan, Huizhou, Guangdong 516000 (CN); Huang, Liansheng, Huizhou, Guangdong 516000 (CN)
(74) Representative: Michalski Hüttermann & Partner Patentanwälte mbB

(56) References cited:
- WO-A1-2020/100152
- CN-A- 112 467 286
- CN-A- 114 256 531
- DE-A1- 102021 105 861
- US-A1- 2014 162 106
- US-A1- 2015 188 203
- US-A1- 2020 251 795

## Description

### TECHNICAL FIELD

The present disclosure relates to the technical field of batteries, and in particular, to a battery pack.

### BACKGROUND

With the rapid development of the new energy vehicle technology and the continuous expansion of the market, the endurance mileage and the charge ratio of a pure electric vehicle have become the core indicators that users are increasingly concerned about. In order to meet market requirements, the energy density of the power battery is increasing, and a high-nickel positive electrode and a silicon-carbon negative electrode have gradually become the mainstream technology route. However, as the energy of the cells increases, the heat generated during operation of the cells increases rapidly. In particular, in a high rate charging mode, a heat generation problem of the cells becomes particularly prominent, and temperature control becomes extremely difficult.
WO 2020/100152A1 relates to a lithium metal oxide Battery pack that has plurality of modules forming a battery pack to power electric vehicle. A module consists of 20 individual cylindrical cells fully-sealed on housing submerged/immersed into specially processed dielectric coolant from synthetic oils for heat removal in batteries.
US 2015/188203A1 relates to a secondary battery apparatus that includes an outer case including an airtight battery storing chamber formed inside, a coolant inlet for supplying an insulative liquid coolant to the battery storing chamber, and a coolant outlet for discharging the liquid coolant from the battery storing chamber; and a battery cell including an electrode terminal, the battery cell being disposed in the battery storing chamber of the outer case and immersed in the liquid coolant filled in the battery storing chamber.
US2014/162106A1 relates to a battery arrangement that has a battery having battery cells with in each case two terminals and a terminal plate on which a terminal of each battery cell is arranged to connect the battery cells. A perforated plate is arranged above the terminal plate. A cooling medium is sprayed through the holes of the perforated plate.

### SUMMARY

In a cooling solution of a cylindrical cell in a related technology, i.e., an indirect liquid cooling technology such as a liquid cooling plate, although a heating problem in a low rate charging mode can be alleviated to a certain extent, cooling efficiency of the cylindrical battery pack is obviously insufficient in a high rate charging mode. When thermal runaway occurs in a cell, a flame may be ejected from an explosion-proof valve of the cell, melt a bus bar easily and is flushed out of the battery pack, which leads to a safety risk to an occupant in a vehicle.

A battery pack is provided according to claim 1. The battery pack includes: a housing, a cover, a cell set and a bus bar. The housing includes a receiving cavity with an open side. The cover is provided over the open side of the housing to close the receiving cavity. The cell set is provided in the receiving cavity, and electrodes of the cell set face the cover. The bus bar is provided between the cell set and the cover, and a pressure relief space is reserved between the bus bar and the cover. The receiving cavity is filled with insulating cooling oil, and the electrodes of the cell set and the bus bar are submerged in the insulating cooling oil. The cell set includes multiple cells. A cover plate on a side of each of the cells facing the cover is provided with a cell positive electrode, at least two cell negative electrodes, and at least two cell explosion-proof valves, a height difference is present between the cell positive electrode and each of the at least two cell negative electrodes, the at least two cell explosion-proof valves faces the pressure relief space, and the at least two cell explosion-proof valves and the at least two negative electrodes are alternately distributed along a circumferential direction of the cell positive electrodes.

The battery pack utilizes heat convection of the liquid to achieve the efficient cooling of the cell set by injecting insulating cooling oil into the receiving cavity. When thermal runaway occurs in the cells, the insulating cooling oil in the pressure relief space is capable of extinguishing a flame ejected from an explosion-proof valve directly. Furthermore, the pressure relief space is capable of providing sufficient space for the bus bar, so that the bus bar is not susceptible to an electrical short circuit when the battery pack is subjected to a mechanical impact. In addition, due to the presence of the insulating cooling oil, the bus bar may not be melted because of thermal runaway of the cells, which greatly improves the safety performance of the battery pack.

### BRIEF DESCRIPTION OF THE DRAWINGS

Fig. 1 is a schematic structural diagram illustrating a perspective view of a battery pack according to an embodiment of the present disclosure;
Fig. 2 is a schematic structural diagram illustrating an exploded view of a battery pack according to an embodiment of the present disclosure;
Fig. 3 is a schematic structural diagram illustrating cross-sectional view of a battery pack according to an embodiment of the present disclosure;
Fig. 4 is a schematic diagram illustrating an assembling structure of a cell set and a bus bar according to an embodiment of the present disclosure;
Fig. 5 is a schematic structural diagram of a connection bus plate according to an embodiment of the present disclosure; and
Fig. 6 is a schematic structural diagram of a cell according to an embodiment of the present disclosure.

Meanings of the reference numerals are as follows: 1 housing, 11 receiving cavity, 12 cooling oil inlet, 13 cooling oil outlet, 2 cover, 3 cell set, 31 cell, 32 cell positive electrode, 33 cell negative electrode, 331 negative electrode connection area, 34 cell explosion-proof valve, 4 bus bar, 41 positive electrode bus plate, 42 negative bus plate, 43 connection bus plate, 431 positive electrode connection part, 432 negative electrode connection part, 433 step part, 5 fixing layer, 51 cell groove, 6 pressure relief space.

### DETAILED DESCRIPTION

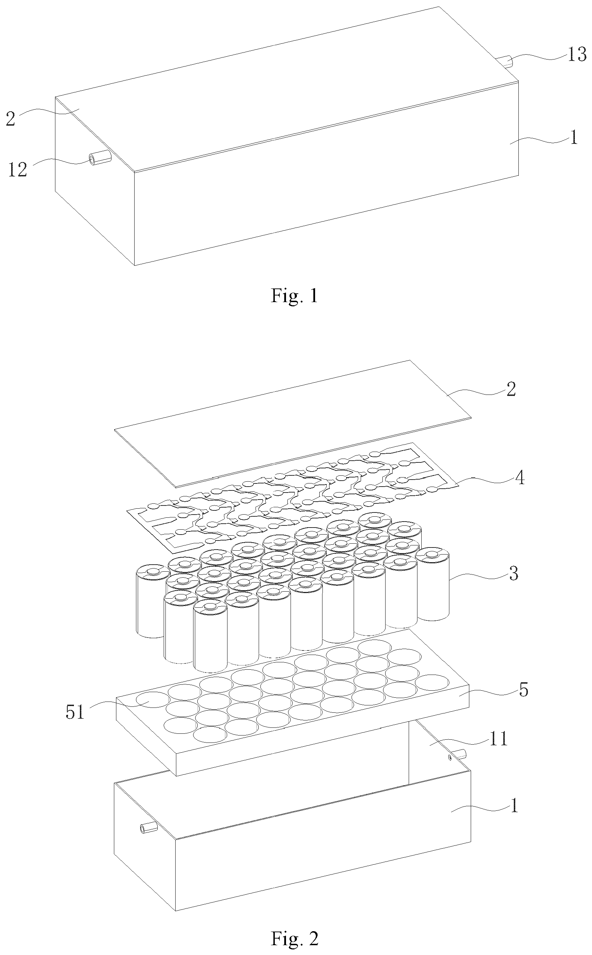

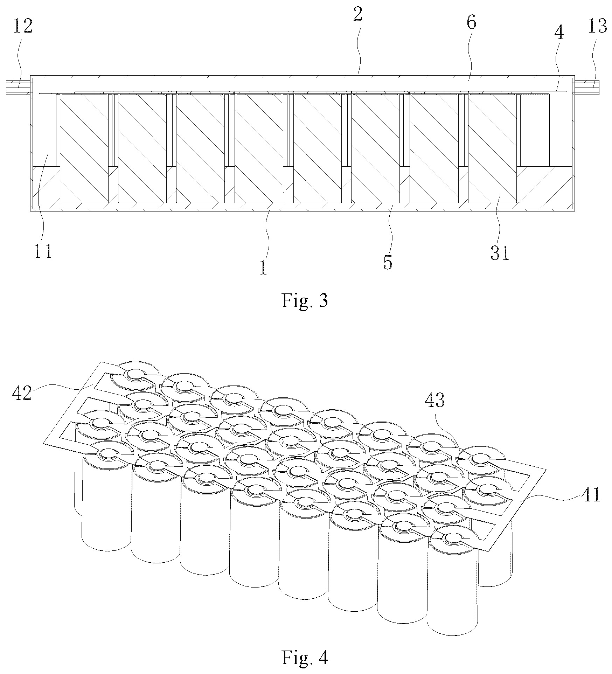

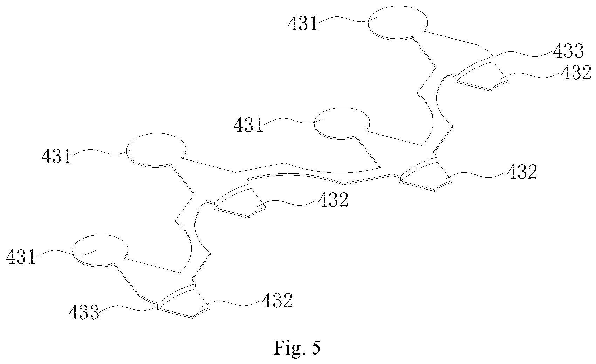

Referring to Figs. 1 to 6, a battery pack is disclosed according to the first embodiment of the present application. The battery pack includes a housing 1, a cover 2, a cell set 3 and a bus bar 4. In the first embodiment, the housing 1 is a rectangular housing, which includes a receiving cavity 11 with an opening on a side of the housing 1. The cover 2 is provided over the side of the housing 1 with the opening to close the receiving cavity 11. The cell set 3 includes a plurality of rows of cells 31, and the plurality of rows of cells 31 are staggered in position to maximize space utilization. The cell set 3 is provided in the receiving cavity 11. The bus bar 4 is provided between the cell set 3 and the cover 2. It should be noted that, as shown in Fig. 3, a pressure relief space 6 is reserved between the bus bar 4 and the cover 2. Firstly, in response to problems of large heat generation from the cells 31 and the difficulty in controlling the temperature, the battery pack utilizes heat convection of the liquid to achieve the efficient cooling of the cell set 3 by injecting insulating cooling oil into the receiving cavity 11. Secondly, in response to a safe fixing problem of the cell set 3, a fixing layer 5 is provided between the housing 1 and at least one side of the cell set 3, which enhances the stability of the cell set 3 in the receiving cavity 11. Finally, due to the presence of the insulating cooling oil, the bus bar 4 may not be melted because of thermal runaway of the cells 31, which greatly improves the safety performance of the battery pack. When thermal runaway occurs in the cells 31, a flame ejected from an explosion-proof valve is capable of being directly extinguished by the insulating cooling oil in the pressure relief space 6. Furthermore, the pressure relief space 6 is capable of providing sufficient space for the bus bar 4, so that the bus bar 4 is not susceptible to electrical short-circuiting when the battery pack is subjected to a mechanical impact.

In some implementations, the fixing layer 5 is provided between the housing 1 and the at least one side of the cell set 3. In some implementations, the fixing layer 5 is prepared from a sealing adhesive to fix the cell set 3 in the receiving cavity 11. Optimally, the sealing adhesive is injected in an amount such that the fixing layer 5 is capable of fixing at least one-third of each of the cells 31. Therefore, the fixing layer 5 is formed with a plurality of cell grooves 51 corresponding to the cells 31 of the cell set 3, and the cell grooves 51 are consistent with the cells 31 of the cell set 3 in number, size and shape. By sealing the adhesive, it greatly enhances the overall structural stability of the battery pack, and reduces shifting or damage that may occur to the cells 31 under vibration or impact. The bus bar 4 is required to avoid the fixing layer 5 and to be connected to the cell set 3.

It should be noted that, in some implementations, the fixing layer 5 includes, but is not limited to, a perforated bottom guard, a foam adhesive, or a bracket, etc., as long as the fixing layer 5 is capable of providing a fixing effect on the cell set 3, which is not specifically limited in the present disclosure. Similarly, the housing 1 may be in another shape, and types of the cells 31 include, but are not limited to, pouch cells or cylindrical cells.

During assembly, referring to Fig. 2, with an opening direction of the housing 1 being set to be upward, the cells 31 are uniformly placed on a bottom of the receiving cavity 11 in the housing; then the sealing adhesive is filled into the receiving cavity 11, with a height of the filled sealing adhesive meeting that the cells 31 be fixed stably without being shaken easily; then the bus bar 4 is assembled on a top surface of the cell set 3 to converge the positive electrodes of the plurality of cells 31 to form a main positive electrode, and to converge the negative electrodes of the plurality of cells 31 to form a main negative electrode; and finally a top of the cell set 3 is covered with the cover 2 so as to close the receiving cavity 11, the insulating cooling oil for heat exchange circulation is filled into the closed receiving cavity 11, and the positive and negative electrodes of the cell set 3 and the bus bar 4 are required to be submerged in the insulating cooling oil.

When used, the battery pack is inverted and placed inside a vehicle, so that the cover 2, the cell positive electrodes 32 and the bus bar 4 of the battery pack are located below. Such a design maximizes the safety of the occupants in the vehicle, and makes the battery pack with the cover 2 facing downward is more friendly to users above the battery pack. The principle is as follows: the cells 31 inside the battery pack, when working and generating heat, realizes cooling by exchanging heat with the insulating cooling oil, the insulating cooling oil, when a mechanical impact causes an electrical short circuit, is capable of extinguishing gas and flame with high temperature and high pressure gas ejected from the explosion-proof valve, and even though an impact force is too high, the impact force may be ejected from a direction of the cover 2 of the inverted battery pack, i.e., the impact force is directed towards the bottom of the vehicle, without affecting the occupants in the vehicle.

Of course, the battery pack may also be applied to other fields for power supply. When the battery pack is not to be used for a long time, the insulating cooling oil may be set to non-circulation as long as the cooling effect can be played when in use, and the insulating cooling oil is cooled naturally when not in use.

In the first embodiment, referring to Fig. 1 to 3, in order to facilitate injecting the insulating cooling oil into and discharging the insulating cooling oil from the receiving cavity 11 of the housing 1, and to improve the efficiency of the replacement of the insulating cooling oil, a cooling oil inlet 12 and a cooling oil outlet 13 are provided on two sides of the housing 1, respectively, both the cooling oil inlet 12 and the cooling oil outlet 13 are in communication with the receiving cavity 11, so as to inject insulating cooling oil into the receiving cavity 11 or to discharge insulating cooling oil from the receiving cavity 11. In some implementations, the cooling oil inlet 12 and cooling oil outlet 13 are provided at positions of the housing 1 close to the cover 2, which is more favorable for draining since the battery pack is used upside down. The cooling oil inlet 12 and cooling oil outlet 13 is capable of realizing effects of heating and liquid cooling of the insulating cooling oil by cooperating with an oil pump, a radiator and a heater of the vehicle. It should be noted that, in some implementations, the cooling oil inlet 12 and the cooling oil outlet 13 may be provided on the cover body 2, as long as the inversion of the battery pack is not affected.

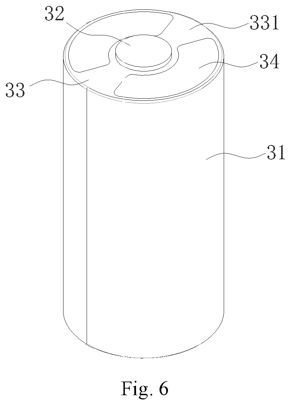

In more detail, referring to Fig. 6, a cover plate on a side of each of the cells 31 of the cell set 3 facing the cover 2 is provided with a cell positive electrode 32, a cell negative electrode 33 and a cell explosion-proof valve 34. The cell positive electrode 32 uses a high-nickel positive electrode, and the cell negative electrode 33 uses a silicone-carbon negative electrode. The cell positive electrode 32, the cell negative electrode 33, and the cell explosion-proof valve 34 are adjacent to each other and/or spaced apart from each other, which includes the following implementations: (a) the cell positive electrode 32 and the cell explosion-proof valve 34 are adjacent to each other, and the cell negative electrode 33 and the cell explosion-proof valve 34 are spaced apart from each other; (b) the cell positive electrode 32 and the cell explosion-proof valve 34 are spaced apart from each other, and the cell negative electrode 33 and the cell explosion-proof valve 34 are adj acent to each other; (c) the cell positive electrode 32 and the cell explosion-proof valve 34 are spaced apart from each other, and the cell negative electrode 33 and the cell explosion-proof valve 34 are spaced apart from each other; and (d) the cell positive electrode 32 and the cell explosion-proof valve 34 are adjacent to each other, and the cell negative electrode 33 and the cell explosion-proof valve 34 are adjacent to each other. In the first embodiment, two cell explosion-proof valves 34 are provided. The cell negative electrode 33 includes two negative electrode connection areas 331. The cell positive electrode 32 is provided in a center of a side of each of the cells 31 facing the cover body 2. The two negative electrode connection areas 331 and the two cell explosion-proof valves 34 are alternately distributed along a circumferential direction of the cell positive electrode 32. A height difference is present between the cell negative electrode 33 and the cell positive electrode 32 such that the cell positive electrode 32 is protruded from the cell negative electrode 33. Therefore, the cell negative electrode 33 and the cell positive electrode 32 may be provided adjacent to each other, the cell explosion-proof valves 34 are spaced apart from the cell positive electrode 32, the cell explosion-proof valves 34 face the pressure relief space 6, and the cell explosion-proof valves 34 are in the shape of a scalloped ring, and edges of which are rounded off.

Referring to Figs. 4 to 6, the bus bar 4 includes: a positive electrode bus plate 41, a negative electrode bus plate 42, and a plurality of connection bus plates 43. The positive electrode bus plate 41 is connected to the cell positive electrodes 32 of the plurality of cells 31 of the cell set 3 at an end of the cell set 3. The negative electrode bus plate 42 is connected to the cell negative electrodes 33 of the plurality of cells 31 of the cell set 3 at the other end of the cell set 3. The plurality of connection bus plates 43 are configured to connect the cell positive electrodes 32 of the plurality of cells 31 of the cell set 3 to the cell negative electrodes 33 of the plurality of cells 31 of the cell set 3. In the present embodiment 1, in order to be adapted to the explosion-proof valve structure, in some implementations, each of the plurality of connection bus plates 43 includes a positive electrode connection part 431 configured to be connected to corresponding one of the cell positive electrodes 32 and a negative electrode connection part 432 configured to be connected to corresponding one of the cell negative electrodes 33, a step part 433 is provided between the positive electrode connection part 431 and the negative electrode connection part 432, the step part 433 is provided at the edge of the negative electrode connection areas 331 so as to avoid the short circuit caused by the positive electrode connection part 431 touching the cell negative electrode 33 of an adjacent cell 31 when connecting with the cell positive electrodes 32, and a step height difference of the step part 433 is equal to the height difference between the corresponding one of the cell positive electrodes 32 and the corresponding one of the cell negative electrodes 33. An area of the positive electrode connection part 431 is not greater than an area of the corresponding one of the cell positive electrodes 32, and an area of the negative electrode connection part 432 is not greater than an area of the negative electrode connection areas 331 of the corresponding one of the cell negative electrodes 33, so as to achieve a convergence effect on the electrodes of the cell set 3.

In some implementations, the number of the cell explosion-proof valves 34 may be one, or more than two, as long as it is capable of satisfying a normal pressure relief requirement of the cells 31. The number of the negative electrode connection areas 331 may also be one, or more than two. The structure of the bus bar 4 may also be adaptively adjusted according to changes of the negative electrode connection areas 331 in positions, structures and quantities to achieve the assembly effect, which is not specifically limited in the present disclosure.

In summary, the battery pack provided in the present disclosure has the following technical effects.
1. By the fixing layer 5 provided between the housing 1 and the at least one side of the cell set 3, the stability of the cell set 3 in the receiving cavity 11 is enhanced. The cell grooves 51 of the fixing layer 5 are provided correspondingly to the cells of the cell set 3, which is capable of ensuring that each of the cells 31 may be precisely placed in its corresponding position, avoiding displacement or misplacement of the cells 31 during assembly or use.
2. The presence of the insulating cooling oil not only improves the heat dissipation effect, but also prevents the bus bar 4 from being melted because of thermal runaway of the cells 31, which greatly improves the safety performance of the battery pack. In addition, the setting of the cell explosion-proof valves 34 and the design of the pressure relief space 6 are also capable of effectively diverting and reducing the internal pressure when thermal runaway occurs in the cells 31, improving the safety of the cells 31.

## Claims

1. A battery pack comprising:
a housing (1), comprising a receiving cavity (11) with an opening on a side of the housing (1);
a cover (2), provided over the side of the housing (1) with the opening to close the receiving cavity (11);
a cell set (3), provided in the receiving cavity (11), wherein electrodes of the cell set (3) face the cover (2); and
a bus bar (4), provided between the cell set (3) and the cover (2), wherein a pressure relief space (6) is reserved between the bus bar (4) and the cover (2);
wherein the receiving cavity (11) is filled with insulating cooling oil, and the electrodes of the cell set (3) and the bus bar (4) are submerged in the insulating cooling oil;
wherein the cell set (3) comprises a plurality of cells (31);
**characterized in that**:
a cover plate on a side of each of the cells (31) facing the cover (2) is provided with a cell positive electrode (32), at least two cell negative electrodes (33), and at least two cell explosion-proof valves (34), a height difference is present between the cell positive electrode (32) and each of the at least two cell negative electrodes (33), the at least two cell explosion-proof valves (34) face the pressure relief space (6), and the at least two cell explosion-proof valves (34) and the at least two negative electrodes (33) are alternately distributed along a circumferential direction of the cell positive electrode (32).

2. The battery pack according to claim 1, wherein a fixing layer (5) is provided between the housing (1) and at least one side of the cell set (3) to fix the cell set (3) in the receiving cavity (11), and the bus bar (4) avoids the fixing layer (5) and is connected to the electrodes of the cell set (3).

3. The battery pack according to claim 1 or 2, wherein the bus bar (4) comprises:
a positive electrode bus plate (41), connected to cell positive electrodes (32) of a plurality of cells (31) of the cell set (3) at an end of the cell set (3);
a negative electrode bus plate (42), connected to cell negative electrodes (33) of the plurality of cells (31) of the cell set (3) at another end of the cell set (3); and
a plurality of connection bus plates (43), configured to connect the cell positive electrodes (32) of the plurality of cells (31) of the cell set (3) to the cell negative electrodes (33) of the plurality of cells (31) of the cell set (3).

4. The battery pack according to claim 3, wherein each of the connection bus plates (43) comprises a positive electrode connection part (431) configured to be connected to corresponding one of the cell positive electrodes (32) and a negative electrode connection part (432) configured to be connected to corresponding one of the cell negative electrodes (33), and a step part (433) is provided between the positive electrode connection part (431) and the negative electrode connection part (432).

5. The battery pack according to claim 4, wherein a step height difference of the step part (433) is equal to the height difference between the corresponding one of the cell positive electrodes (32) and the corresponding one of the cell negative electrodes (33).

6. The battery pack according to claim 4 or 5, wherein an area of the positive electrode connection part (431) is not greater than an area of the corresponding one of the cell positive electrodes (32), and an area of the negative electrode connection part (432) is not greater than an area of the negative electrode connection areas (331) of the corresponding one of the cell negative electrodes (33).

7. The battery pack according to any one of claims 2 to 6, wherein the fixing layer (5) is provided with a plurality of cell grooves (51) corresponding to the plurality of the cells (31) of the cell set (3), and the cell grooves (51) are consistent with the cells (31) of the cell set (3) in number, size and shape.

8. The battery pack according to any one of claims 1 to 7, wherein the housing (1) is provided with a cooling oil inlet (12) and a cooling oil outlet (13), both the cooling oil inlet (12) and cooling oil outlet (13) are in communication with the receiving cavity (11), so as to inject insulating cooling oil into the receiving cavity (11) or to discharge insulating cooling oil from the receiving cavity (11).

## Patentansprüche

1. Batteriepack, umfassend:
ein Gehäuse (1), umfassend einen Aufnahmehohlraum (11), mit einer Öffnung an einer Seite des Gehäuses (1);
eine Abdeckung (2), bereitgestellt über die Seite des Gehäuses (1) mit der Öffnung, zum Verschließen des Aufnahmehohlraums (11);
einen Zellensatz (3), bereitgestellt in dem Aufnahmehohlraum (11), wobei Elektroden des Zellensatzes (3) der Abdeckung (2) zugewandt sind; und
eine Sammelschiene (4), bereitgestellt zwischen dem Zellensatz (3) und der Abdeckung (2), wobei ein Druckentlastungsraum (6) zwischen der Sammelschiene (4) und der Abdeckung (2) vorgesehen ist;
wobei der Aufnahmehohlraum (11) mit isolierendem Kühlöl befüllt ist und die Elektroden des Zellensatzes (3) und die Sammelschiene (4) in das isolierende Kühlöl eingetaucht sind;
wobei der Zellensatz (3) eine Vielzahl von Zellen (31) umfasst;
**dadurch gekennzeichnet, dass**:
eine Abdeckplatte an einer Seite von jeder der Zellen (31), die der Abdeckung (2) zugewandt ist, mit einer positiven Zellelektrode (32), mindestens zwei negativen Zellelektroden (33) und mindestens zwei explosionssicheren Zellenventilen (34) bereitgestellt ist, wobei ein Höhenunterschied zwischen der positiven Zellelektrode (32) und jeder der mindestens zwei negativen Zellelektroden (33) vorhanden ist, wobei die mindestens zwei explosionssicheren Zellenventile (34) dem Druckentlastungsraum (6) zugewandt sind, und wobei die mindestens zwei explosionssicheren Zellenventile (34) und die mindestens zwei negativen Elektroden (33) entlang einer Umfangsrichtung der positiven Zellelektrode (32) abwechselnd verteilt sind.

2. Batteriepack nach Anspruch 1, wobei eine Fixierschicht (5) zwischen dem Gehäuse (1) und mindestens einer Seite des Zellensatzes (3) zum Fixieren des Zellensatzes (3) in dem Aufnahmehohlraum (11) bereitgestellt ist, und die Sammelschiene (4) die Fixierschicht (5) ausspart und mit den Elektroden des Zellensatzes (3) verbunden ist.

3. Batteriepack nach Anspruch 1 oder 2, wobei die Sammelschiene (4) umfasst:
eine Sammelschiene (41) für positive Elektroden, verbunden mit positiven Zellelektroden (32) einer Vielzahl von Zellen (31) des Zellensatzes (3) an einem Ende des Zellensatzes (3);
eine Sammelschiene (42) für negative Elektroden, verbunden mit negativen Zellelektroden (33) der Vielzahl von Zellen (31) des Zellensatzes (3) an einem anderen Ende des Zellensatzes (3); und
eine Vielzahl von Verbindungssammelschienen (43), konfiguriert zum Verbinden der positiven Zellelektroden (32) der Vielzahl von Zellen (31) des Zellensatzes (3) mit den negativen Zellelektroden (33) der Vielzahl von Zellen (31) des Zellensatzes (3).

4. Batteriepack nach Anspruch 3, wobei jede der Verbindungssammelschienen (43) einen Verbindungsteil (431) für positive Elektroden umfasst, der dazu konfiguriert ist, mit einer entsprechenden der positiven Zellelektroden (32) verbunden zu werden, und einen Verbindungsteil (432) für negative Elektroden, der dazu konfiguriert ist, mit einer entsprechenden der negativen Zellelektroden (33) verbunden zu werden, und wobei ein Stufenteil (433) zwischen dem Verbindungsteil (431) für positive Elektroden und dem Verbindungsteil (432) für negative Elektroden bereitgestellt ist.

5. Batteriepack nach Anspruch 4, wobei ein Stufenhöhenunterschied des Stufenteils (433) gleich dem Höhenunterschied zwischen der entsprechenden der positiven Zellelektroden (32) und der entsprechenden der negativen Zellelektroden (33) ist.

6. Batteriepack nach Anspruch 4 oder 5, wobei eine Fläche des Verbindungsteils (431) für positive Elektroden nicht größer ist als eine Fläche der entsprechenden der positiven Zellelektroden (32), und eine Fläche des Verbindungsteils (432) für negative Elektroden nicht größer ist als eine Fläche der Verbindungsflächen (331) für negative Elektroden der entsprechenden der negativen Zellelektroden (33).

7. Batteriepack nach einem der Ansprüche 2 bis 6, wobei die Fixierschicht (5) mit einer Vielzahl von Zellvertiefungen (51) bereitgestellt ist, die der Vielzahl der Zellen (31) des Zellensatzes (3) entsprechen, und wobei die Zellvertiefungen (51) in Anzahl, Größe und Form mit den Zellen (31) des Zellensatzes (3) übereinstimmen.

8. Batteriepack nach einem der Ansprüche 1 bis 7, wobei das Gehäuse (1) mit einem Kühlöleinlass (12) und einem Kühlölauslass (13) bereitgestellt ist, wobei sowohl der Kühlöleinlass (12) als auch der Kühlölauslass (13) mit dem Aufnahmehohlraum (11) in Verbindung stehen, um isolierendes Kühlöl in den Aufnahmehohlraum (11) einzuleiten oder isolierendes Kühlöl aus dem Aufnahmehohlraum (11) auszuleiten.

## Revendications

1. Bloc-batterie comprenant :
un boîtier (1), comprenant une cavité réceptrice (11) avec une ouverture sur un côté du boîtier (1) ;
un couvercle (2), prévu sur le côté du boîtier (1) avec l'ouverture pour fermer la cavité réceptrice (11) ;
un ensemble (3) de cellules, prévu dans la cavité réceptrice (11), dans lequel des électrodes de l'ensemble (3) de cellules font face au couvercle (2) ; et
une barre omnibus (4), prévue entre l'ensemble (3) de cellules et le couvercle (2), dans lequel un espace de décompression (6) est réservé entre la barre omnibus (4) et le couvercle (2) ;
dans lequel la cavité réceptrice (11) est remplie d'huile de refroidissement isolante, et les électrodes de l'ensemble (3) de cellules et la barre omnibus (4) sont immergées dans l'huile de refroidissement isolante ;
dans lequel l'ensemble (3) de cellules comprend une pluralité de cellules (31) ;
**caractérisé en ce que** :
une plaque de recouvrement sur un côté de chacune des cellules (31) faisant face au couvercle (2) est dotée d'une électrode positive (32) de cellule, d'au moins deux électrodes négatives (33) de cellule et d'au moins deux vannes antidéflagrantes (34) de cellule, une différence de hauteur est présente entre l'électrode positive (32) de cellule et chacune des au moins deux électrodes négatives (33) de cellule, les au moins deux vannes antidéflagrantes (34) de cellule faisant face à
l'espace de décompression (6), et les au moins deux vannes antidéflagrantes (34) de cellule et les au moins deux électrodes négatives (33) sont réparties alternativement le long d'une direction circonférentielle de l'électrode positive (32) de cellule.

2. Bloc-batterie selon la revendication 1, dans lequel une couche de fixation (5) est prévue entre le boîtier (1) et au moins un côté de l'ensemble (3) de cellules pour fixer l'ensemble (3) de cellules dans la cavité réceptrice (11), et la barre omnibus (4) évite la couche de fixation (5) et est connectée aux électrodes de l'ensemble (3) de cellules.

3. Bloc-batterie selon la revendication 1 ou la revendication 2, dans lequel la barre omnibus (4) comprend :
une plaque (41) de bus d'électrode positive, connectée à des électrodes positives (32) de cellule d'une pluralité de cellules (31) de l'ensemble (3) de cellules au niveau d'une extrémité de l'ensemble (3) de cellules ;
une plaque (42) de bus d'électrode négative, connectée à des électrodes négatives (33) de cellule de la pluralité de cellules (31) de l'ensemble (3) de cellules au niveau d'une autre extrémité de l'ensemble (3) de cellules ; et
une pluralité de plaques (43) de bus de connexion, configurées pour connecter les électrodes positives (32) de cellule de la pluralité de cellules (31) de l'ensemble (3) de cellules aux électrodes négatives (33) de cellule de la pluralité de cellules (31) de l'ensemble (3) de cellules.

4. Bloc-batterie selon la revendication 3, dans lequel chacune des plaques (43) de bus de connexion comprend une partie (431) de connexion d'électrode positive configurée pour être connectée à une électrode correspondante parmi les électrodes positives (32) de cellule et une partie (432) de connexion d'électrode négative configurée pour être connectée à une électrode correspondante parmi les électrodes négatives (33) de cellule, et une partie (433) étagée est prévue entre la partie (431) de connexion d'électrode positive et la partie (432) de connexion d'électrode négative.

5. Bloc-batterie selon la revendication 4, dans lequel une différence de hauteur d'étages de la partie (433) étagée est égale à la différence de hauteur entre l'électrode correspondante parmi les électrodes positives (32) de cellule et l'électrode correspondante parmi les électrodes négatives (33) de cellule.

6. Bloc-batterie selon la revendication 4 ou la revendication 5, dans lequel une surface de la partie (431) de connexion d'électrode positive n'est pas supérieure à une surface de l'électrode correspondante parmi les électrodes positives (32) de cellule, et une surface de la partie (432) de connexion d'électrode négative n'est pas supérieure à une surface parmi les surfaces (331) de connexion d'électrode négative de l'électrode correspondante parmi les électrodes négatives (33) de cellule.

7. Bloc-batterie selon l'une quelconque des revendications 2 à 6, dans lequel la couche de fixation (5) est dotée d'une pluralité de rainures (51) de cellule correspondant à la pluralité des cellules (31) de l'ensemble (3) de cellules, et les rainures (51) de cellule sont cohérentes avec les cellules (31) de l'ensemble de cellules (3) en termes de nombre, de taille et de forme.

8. Bloc-batterie selon l'une quelconque des revendications 1 à 7, dans lequel le boîtier (1) est doté d'une entrée (12) d'huile de refroidissement et d'une sortie (13) d'huile de refroidissement, l'entrée (12) d'huile de refroidissement et la sortie (13) d'huile de refroidissement sont toutes deux en communication avec la cavité réceptrice (11), de façon à injecter de l'huile de refroidissement isolante dans la cavité réceptrice (11) ou à évacuer de l'huile de refroidissement isolante de la cavité réceptrice (11).
